# EUROPÄISCHE PATENTSCHRIFT

(11) **EP 3 450 411 B1**
(45) Veröffentlichungstag und Bekanntmachung des Hinweises auf die Patenterteilung: **24.06.2020**
(21) Anmeldenummer: 18188402.4
(22) Anmeldetag: 10.08.2018
(51) Int. Cl.: C03C 3/087, C03C 3/097, C03C 4/02, C03C 10/00

(54) **EINGEFÄRBTE TRANSPARENTE LITHIUMALUMINIUMSILIKAT-GLASKERAMIK UND IHRE VERWENDUNG**
COLOURED TRANSPARENT LITHIUM ALUMINIUM SILICATE GLASS CERAMIC AND USE OF SAME
VITROCERAMIQUE EN ALUMINOSILICATE DE LITHIUM TRANSPARENTE TEINTÉE ET SON UTILISATION

(30) Priorität: 30.08.2017 DE 102017119914; 23.01.2018 DE 102018101423
(43) Veröffentlichungstag der Anmeldung: 06.03.2019
(73) Patentinhaber: SCHOTT AG, 55122 Mainz (DE)
(72) Erfinder: WEISS, Evelin, 55131 Mainz (DE); SPIER, Martin, 55457 Horrweiler (DE); BOCKMEYER, Dr. Matthias, 55116 Mainz (DE); ZENKER, Dr. Thomas, 55268 Nieder-Olm (DE); SCHÖNBERGER, Klaus, 55127 Mainz (DE); STINNER, Johannes, 55131 Mainz (DE); HOCHREIN, Dr. Oliver, 55130 Mainz (DE); MARTENS, Uwe, 55252 Mainz (DE); BUG, Dr. Michael, 64367 Mühltal (DE)

(56) Entgegenhaltungen:
- EP-A1- 3 040 318
- DE-A1-102010 032 113

## Beschreibung

Die Erfindung betrifft eine eingefärbte transparente Lithiumaluminiumsilikat-Glaskeramik gemäß dem Oberbegriff des Anspruchs 1. Die Erfindung betrifft auch die Verwendung einer solchen LAS-Glaskeramik.

Es ist bekannt, dass sich Gläser aus dem System Li₂O-Ai₂O₃-SiO₂ in Glaskeramiken mit Hochquarz-Mischkristallen und/oder Keatit-Mischkristallen als Hauptkristallphasen umwandeln lassen. Für den ersten Typ von Glaskeramiken finden sich in der Literatur auch die Synonyme "β-Quarz" oder "β-Eukryptit" und für den zweiten Typ "β-Spodumen" als Bezeichnung für die Kristallphasen. Ein bevorzugtes Anwendungsgebiet für LAS-Glaskeramiken ist ihre Verwendung als Kochfläche.

Eine Schlüsseleigenschaft dieser Glaskeramiken ist, dass sie in einem Temperaturbereich von Raumtemperatur bis etwa 700°C über einen äußerst niedrigen thermischen Ausdehnungskoeffizienten α_{20/700} von üblicherweise unter 1,5·10⁻⁶/K verfügen. Glaskeramiken mit Hochquarz-Mischkristallen als Hauptkristallphase verfügen über niedrigere Ausdehnungskoeffizienten im Bereich ihrer Anwendungstemperaturen beispielsweise als Kochfläche meist um 0 ± 0,3•10⁻⁶/K, während die Glaskeramiken mit Keatit-Mischkristallen als Hauptkristallphase bei Werten um 0,8·10⁻⁶/K bis 1,5·10⁻⁶/K liegen. Auch in ihren mittleren Kristallitgrößen unterscheiden sich die beiden Glaskeramiktypen. Glaskeramiken mit Hochquarz-Mischkristallen sind aufgrund ihrer niedrigeren Kristallitgröße von üblicherweise unter 50 nm transparent oder transparent eingefärbt herstellbar. Bildet der Keatit die Hauptphase, so liegen üblicherweise die mittleren Kristallitgrößen über 100 nm und sind wegen der resultierenden Lichtstreuung transluzent bis opak. Es gibt jedoch auch transparente Keatitphasen, z.B. beschrieben in DE 10 2014 226 986 A1 oder FR 3 002 532 A1.

Aufgrund der niedrigen thermischen Ausdehnung bei ihren Anwendungstemperaturen besitzen LAS-Glaskeramiken eine ausgezeichnete Temperaturunterschiedsfestigkeit und Temperaturwechselbeständigkeit sowie Dimensionskonstanz.

Die großtechnische Herstellung von LAS-Glaskeramiken ist dem Fachmann bekannt. Bei ihr wird zunächst das kristallisierbare Ausgangsglas aus einem Gemisch aus Scherben und pulverförmigen Gemengerohstoffen bei Temperaturen üblicherweise zwischen 1550 °C und 1700 °C geschmolzen und geläutert. Als Läutermittel werden meist Arsen- und/oder Antimonoxid oder insbesondere für umweltfreundliche Läuterung Zinnoxid eingesetzt. Zur Verbesserung der Blasenqualität kann auch eine Hochtemperaturläuterung oberhalb 1700 °C eingesetzt werden. Nach dem Einschmelzen und Läutern erfährt das Glas üblicherweise eine Heißformgebung durch Gießen, Pressen oder durch Walzen oder Floaten um Platten herzustellen.
In einem anschließenden Temperaturprozess wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 °C und 800 °C Keime, üblicherweise aus ZrO₂/TiO₂-Mischkristallen, erzeugt werden. Bei anschließender Temperaturerhöhung wachsen bei der Kristallisationstemperatur von 800 °C bis 950 °C die Hochquarz-Mischkristalle auf diesen Keimen auf.
Bei der maximalen Herstelltemperatur wird das Gefüge der Glaskeramik homogenisiert, hierbei werden die optischen, physikalischen und chemischen Eigenschaften eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 950 °C bis 1250 °C. Mit der Umwandlung erhöht sich der thermische Ausdehnungskoeffizient der Glaskeramik, und i.a. tritt durch weiteres Kristallwachstum Lichtstreuung verbunden mit transluzentem bis opakem Aussehen auf. Bei der Umwandlung erhöht sich die Kristallinität und die Glaskeramiken werden fester.

Durch Zusatz von Farboxiden wie V₂O₅, CoO, NiO, Fe₂O₃, Cr₂O₃, CeO₂ einzeln oder in Kombination können die Glaskeramiken eingefärbt werden, um zum Beispiel schwarze Kochflächen mit bestimmtem Transmissionsverlauf herzustellen.

Auch bei eingefärbten Glaskeramiken unterscheidet man zwischen transparenten, transluzenten und opaken Glaskeramiken. Erstere werden häufig im Unterschied zu den nicht eingefärbten transparenten Glaskeramiken, die transparent genannt werden, als eingefärbt transparent bezeichnet. Für die optische Qualität eingefärbter transparenter Glaskeramiken sind die Transparenz und der Farbeindruck maßgeblich. Transparenz bedeutet, dass die Glaskeramiken über relativ hohe Lichttransmission im sichtbaren Bereich sowie geringe Lichtstreuung (Trübung) verfügen sollen.
Die Lichttransmission gemessen im CIE-Farbsystem als Lichttransmission Y (D65, 2°), häufig auch als τᵥᵢₛ oder Brightness bezeichnet, soll daher zum einen einen Mindestwert aufweisen, um eine hinreichende Sicht der unterseitig angebrachten Anzeigen im eingeschalteten Zustand zu gewährleisten, und zum anderen einen Höchstwert nicht überschreiten, um im ausgeschalteten Zustand das Kochfeldinnere unsichtbar zu lassen, also um einen Deadfronteffekt, sei es in Kombination mit einen Farbkompensationsfilter oder ohne einen solchen Filter, realisieren zu können.
Die transparente Glaskeramik soll über geringe bis keine visuell störende Lichtstreuung verfügen, damit die Durchsicht auf Gegenstände und leuchtende Anzeigen nicht verfälscht wird. Die Anzeigen von Displays unter der Glaskeramikplatte sollen klar, die Konturen scharf und praktisch ohne Trübung sichtbar sein.
Die geringe Lichtstreuung wird unter anderem über eine hohe Keimdichte erreicht, die dazu führt, dass die aufwachsenden Hochquarz-Mischkristalle mit ihrer Größe unterhalb des Bereiches der Wellenlänge des sichtbaren Lichtes liegen. Typischerweise liegt die mittlere Kristallitgröße der Hochquarz-Mischkristalle im Bereich von 20 nm bis 50 nm. Eine hohe Keimdichte setzt ausreichende Gehalte an Keimbildnern sowie ausreichende Keimbildungszeiten während der Keramisierung voraus.

Will man das beste Ergebnis in Bezug auf eine gute Sichtbarkeit der unterseitig montierten Anzeigen bei gleichzeitig reduzierter Einsicht ins Kochfeldinnere, so benötigt man im sichtbaren Transmissionsbereich (380 nm - 780 nm) eine möglichst flach verlaufende Kurve. Gewünscht ist insbesondere eine gut verteilte neutral verlaufende Lichtdurchlässigkeit für spektrale Wellenlängen zwischen 450 nm und 700 nm.
In dem Maße, in dem Anzeigen in Kochfeldern in anderen Farben als rot an Bedeutung gewinnen, sind im Stand der Technik die verschiedensten Transmissionsverläufe geschildert worden, die jedoch alle den ein oder anderen Nachteil haben und/oder auf nachteilige Weise realisiert werden.

DE 10 2008 050 263 A1 beschreibt transparente, eingefärbte Glaskeramikkochflächen mit einer spektralen Transmission von > 0,1 % im Bereich des sichtbaren Lichts für Wellenlängen > 450 nm, jedoch maximal einer Lichttransmission im Sichtbaren von 2,5%.

DE 10 2009 013 127 A1 beschreibt transparente, eingefärbte Glaskeramikkochflächen mit einer Lichttransmission im Sichtbaren von bis zu 5 % und mit einer spektralen Transmission von > 0,1 % im Bereich des sichtbaren Lichts für Wellenlängen > 450 nm, führt aber nicht zu Produkten mit neutralem Farbeindruck.

DE 10 2012 105 576 A1 und DE 10 2012 105 572 A1 beschreiben Glaskeramikplatten mit τᵥᵢₛ > 2,5% und mit stark variierenden Werten bei den für den Farbeindruck so wichtigen Wellenlängen im Bereich von 420 bis 480 nm.

WO 2012/001300 A1 beschreibt Glas- oder Glaskeramikkochflächen mit τᵥᵢₛ von wenigstens 2,3 % bis zu sehr hellen 40 % und Transmissionen im Bereich 420 nm - 480 nm von mindestens 0,6 % in Kombination mit einem Abdeckmittel, führt aber nicht zu Produkten mit neutralem Farbeindruck.

EP 1 465 460 A1 beschreibt eine Kochfläche, die mit 3 mm Dicke Y(D65)-Werte von 2,5 % - 15 % aufweist. Ihre Ausführungsbeispiele sind As-haltig.

WO 2010/137000 A1 beschreibt Glaskeramiken, die bei einer Dicke von 3 mm eine Lichttransmission von 1,5 bis 5 % und eine spektrale Transmission von > 0,5 % zwischen 450 und 480 nm besitzen. Realisiert werden diese Transmissionen mittels Kobaltoxid.

Auch WO 2010/136731 A1 beschäftigt sich mit der Anzeigefähigkeit von Kochflächen und beansprucht Glaskeramiken, die mit 4 mm Dicke irgendwo im Bereich zwischen 400 und 500 nm eine spektrale Transmission zwischen 0,2 und 4 % besitzen.

DE 10 2010 032 113 beschreibt eine transparente eingefärbte Lithiumaluminiumsilikat Glaskeramik.

Für eine wirtschaftliche Herstellung der Glaskeramiken sind eine niedrige Schmelztemperatur und eine niedrige Verarbeitungstemperatur V_{A} der Ausgangsgläser gewünscht. Weiterhin darf das Glas bei der Formgebung keine Entglasung zeigen, das heißt, es dürfen sich keine störenden Kristalle bilden, die in den Ausgangsgläsern und daraus hergestellten Glaskeramiken die Festigkeit beeinträchtigen.

Es ist Aufgabe der Erfindung, eingefärbte transparente Lithiumaluminiumsilikat-Glaskeramiken zur Verfügung zu stellen, die eine gute Sichtbarkeit der unterseitig montierten Anzeigen bei gleichzeitig reduzierter Einsicht ins Kochfeldinnere und eine möglichst geringe Farbverschiebung der Anzeigefarben durch die Kochfläche hindurch, also eine möglichst unverfälschte Sichtbarkeit der Anzeigefarben rot, grün, blau und somit auch weiß sowie anderen Farben, gewährleisten.

Es ist auch Aufgabe der Erfindung, Verwendungen für die aus den LAS-Glaskeramiken hergestellten Artikel zu finden.

Hierbei sollen die Glaskeramiken den Anforderungen der unterschiedlichen Anwendungen an z. B. chemische Beständigkeit, mechanische Festigkeit, Transmission, Temperaturbelastbarkeit und Langzeitstabilität hinsichtlich Änderungen ihrer Eigenschaften (wie z.B. thermische Ausdehnung, Transmission, Aufbau von Spannungen)genügen.
Und sie sollen wirtschaftliche und umweltfreundliche Fertigungseigenschaften besitzen.

Diese Aufgaben werden durch eine eingefärbte transparente Lithiumaluminiumsilikat-Glaskeramik gemäß Anspruch 1 und durch deren Verwendung gemäß Anspruch 11 gelöst.

Die genannten vielfältigen Anforderungen werden erfüllt von der erfindungsgemäßen umweltfreundlichen eingefärbten transparenten Lithiumaluminiumsilicat-Glaskeramik, die neben den üblichen für eine als Kochfläche geeignete Glaskeramik nötigen Eigenschaften besondere Transmissionseigenschaften aufweist und bei deren Herstellung auf bestimmte umweltschädliche Bestandteile verzichtet wurde.

So besitzt die erfindungsgemäße Glaskeramik eine Lichttransmission gemessen im CIE-Farbsystem als Lichttransmission Y (D65, 2°) von mindestens 2,5 %, vorzugsweise mehr als 2,5 %, bevorzugt mindestens 3,5 % und besonders bevorzugt mindestens 4,5 % und von höchstens 10 %, bevorzugt höchstens 7,5 % und besonders bevorzugt 5 %. Die Werte gelten gemessen mit Normlicht D65, Beobachterwinkel 2° für eine 4 mm dicke polierte Glaskeramikprobe.

Die erfindungsgemäße Glaskeramik besitzt eine spektrale Transmission τ bei 465 nm von mehr als 1,0 %, bevorzugt von mehr als 1,2 %. Die Werte sind gemessen an einer 4 mm dicken polierten keramisierten Glaskeramikprobe.

Darüber hinaus stehen bei der erfindungsgemäßen Glaskeramik diese beiden Transmissionseigenschaften in einem besonderen Verhältnis zueinander.
So beträgt erfindungsgemäß die Differenz (Y (D65, 2°) - τ _{(bei 465 nm)}) nicht mehr als 3 %, vorzugsweise weniger als 3 %.

Die erfindungsgemäße Glaskeramik mit diesen Eigenschaften ist eine Lithiumaluminium-Glaskeramik mit einem V₂O₅-Gehalt von 55 ppm bis 200 ppm, einem Fe₂O₃-Gehalt von 450 ppm bis 1000 ppm mit einem Verhältnis von Fe₂O₃/ V₂O₅ (beide in Gew.-% oder ppm) von 3 bis 9, vorzugsweise von 5 bis 7. Vorzugsweise beträgt der V₂O₅-Gehalt wenigstens 100 ppm, vorzugsweise beträgt er höchstens 200 ppm. Vorzugsweise beträgt der Fe₂O₃-Gehalt wenigstens 700 ppm. Auch die Einheit ppm bezieht sich auf Gewichtsteile.

Die erfindungsgemäße Glaskeramik ist frei von Kobaltoxid, Nickeloxid und von Chromoxid. Unter "frei von" den genannten Komponenten wird verstanden, dass Kobaltoxid, wenn überhaupt, mit maximal 10 ppm (angegeben als CoO) vorhanden ist, dass Nickeloxid, wenn überhaupt, mit maximal 20 ppm (angegeben als NiO) vorhanden ist und dass Chromoxid, wenn überhaupt, mit maximal 20 ppm (angegeben als Cr₂O₃) vorhanden ist.

Damit vereint die erfindungsgemäße Glaskeramik eine Lichttransmission, die einerseits eine gute Sichtbarkeit der unterseitig montierten Anzeigen bei andererseits reduzierter Einsicht ins Kochfeldinnere ermöglicht, und eine Farbdurchlässigkeit der Art, dass nicht nur rot, sondern auch Farben wie grün durchgelassen werden, mit einem sehr neutralen, also unverfälschten Farb- und Helligkeitseindruck führt, also einem trotz Durchgang durch die Glaskeramikplatte kaum veränderten bis unveränderten Lichteindruck.

Vorzugsweise weist die erfindungsgemäße LAS-Glaskeramik eine Transmission im roten Spektralbereich, also im Bereich 610 nm bis 650 nm, auf, die gegenüber der Transmission der Materialien, die üblicherweise für den Einsatz mit roten Anzeigen verwendet werden, erhöht ist. Dies ist vorteilhaft, da in dem Maße, in dem LED-Displays mit immer größerer Anzahl von LEDs ausgestattet werden, bei gleicher Anschlussleistung das spezifische Leistungsangebot pro LED abnimmt. Vorzugsweise besitzt die erfindungsgemäße Glaskeramik daher eine spektrale Transmission τ bei 630 nm von 10,9 % ± 3,8 %, bevorzugt von 10,9 % ± 2,5 %, besonders bevorzugt von 10,9 % ± 2,0 %, ganz besonders bevorzugt 10,9 % ± 1,5 %. Die Werte sind gemessen an einer 4 mm dicken polierten keramisierten Glaskeramikprobe. 10,9 % ± 3,8 % ist als der Bereich von 7,1% bis 14,7 % zu verstehen.

Die erfindungsgemäße LAS-Glaskeramik besitzt eine umweltfreundliche Zusammensetzung. Darunter wird verstanden, dass die Glaskeramik neben ihrer Freiheit von den farbgebenden Oxiden Kobaltoxid, Nickeloxid und Chromoxid auch bis auf unvermeidliche Rohstoffverunreinigungen technisch frei ist von den Läutermitteln Arsen- und Antimonoxid. Als Verunreinigung liegen die Komponenten Arsenoxid und Antimonoxid (angegeben als As₂O₃ bzw. Sb₂O₃) in Gehalten von in der Summe weniger als 1000 ppm, bevorzugt weniger als 400 ppm vor.

Die Oxide Li₂O, Al₂O₃ und SiO₂ sind in einer LAS-Glaskeramik notwendige Bestandteile der Mischkristalle.

Dazu beträgt der Gehalt an Li₂O vorzugsweise wenigstens 3,0 Gew.-%. Vorzugsweise beträgt er höchstens 4,2 Gew.-%, da höhere Gehalte im Herstellprozess eventuell zur Entglasung führen können. Bevorzugt ist ein Gehalt von wenigstens 3,2 Gew.-% Li₂O, bevorzugt ist ein Gehalt von höchstens 4,0 Gew.-% Li₂O.

Der Al₂O₃-Gehalt beträgt, um hohe Viskositäten des Ausgangsglases zu vermeiden und die Entglasungsneigung bei der Formgebung zu unterdrücken, vorzugsweise höchstens 23 Gew.-%. Vorzugsweise beträgt er wenigstens 19 Gew.-%. Bevorzugt ist ein Gehalt von wenigstens 20 Gew.-% Al₂O₃, bevorzugt ist ein Gehalt von höchstens 22 Gew.-% Al₂O₃.

Der SiO₂-Gehalt beträgt vorzugsweise höchstens 69 Gew.-%, da SiO₂ die Viskosität des Glases stark erhöht und höhere Gehalte zu unwirtschaftlichen Schmelz- und Formgebungsbedingungen führen würden. Er beträgt vorzugsweise wenigstens 60 Gew.-%, da SiO₂. Bevorzugt ist ein Gehalt von wenigstens 62 Gew.-% SiO₂, bevorzugt ist ein Gehalt von höchstens 67 Gew.-% SiO₂.

Als fakultative Komponenten können MgO, ZnO und P₂O₅ vorhanden sein und dann in die Hochquarz-Mischkristalle eingebaut werden.
Wenn ZnO vorhanden ist, ist der Gehalt an ZnO vorzugsweise auf höchstens 2,2 Gew.-% beschränkt, da anderenfalls die Gefahr der Bildung unerwünschter Kristallphasen wie Gahnit besteht. Bevorzugt ist ein Gehalt von wenigstens 1 Gew.-% ZnO.
Wenn MgO vorhanden ist, ist der Gehalt an MgO vorzugsweise auf höchstens 1,5 Gew.-% beschränkt, da anderenfalls der thermische Ausdehnungskoeffizient der Glaskeramik zu sehr steigt. Bevorzugt ist ein Gehalt von wenigstens 0,1 Gew.-% MgO, bevorzugt ist ein Gehalt von höchstens 1,3 Gew.-% MgO.
Wenn P₂O₅ vorhanden ist, ist der Gehalt an P₂O₅ vorzugsweise auf höchstens 3 Gew.-% beschränkt, da anderenfalls die Säurebeständigkeit nachlassen kann. Bevorzugt ist ein Gehalt von höchstens 0,1 Gew.-% P₂O₅. Besonders bevorzugt ist, bis auf mögliche Verunreinigungen auf P₂O₅ zu verzichten.

Vorzugsweise enthält die Glaskeramik Na₂O und/oder K₂O von in der Summe wenigstens 0,2 Gew.-%. Vorzugsweise enthält die Glaskeramik Na₂O und/oder K₂O von in der Summe höchstens 1,5 Gew.-%.
Die Glaskeramik kann auch Erdalkalioxide enthalten, und zwar SrO und/oder CaO vorzugsweise auf in der Summe höchstens 4 Gew.-% beschränkt und/oder BaO vorzugsweise auf maximal 3 Gew.-% beschränkt.
Die genannten Alkalioxide und die genannten Erdalkalioxide unterstützen die Ausbildung einer an diesen Komponenten angereicherten und an Li₂O verarmten glasigen Oberflächenschicht der Glaskeramik. Sie wirkt sich positiv auf die chemische Beständigkeit der Glaskeramik aus.
Die Glaskeramik kann auch B₂O₃ enthalten, und zwar vorzugsweise auf maximal 2 Gew.-% beschränkt.
B₂O₃, die genannten Alkalioxide und die genannten Erdalkalioxide verbessern die Schmelzbarkeit und die Entglasungsstabilität bei der Formgebung des Grünglases. Bei höheren als den genannten Gehalten kann die thermische Ausdehnung erhöht und kann das Kristallisationsverhalten bei der Umwandlung des Grünglases zur Glaskeramik beeinträchtigt werden.
Bevorzugt ist ein Gehalt von höchstens 1 Gew.-% B₂O₃, besonders bevorzugt ist es, bis auf mögliche Verunreinigungen auf B₂O₃ zu verzichten
Bevorzugt ist ein Gehalt von wenigstens 1,0 Gew.-% BaO, bevorzugt ist ein Gehalt von höchstens 2,8 Gew.-% BaO.
Bevorzugt ist ein Gehalt von in der Summe wenigstens 0,2 Gew.-% an SrO und/oder CaO, bevorzugt ist ein Gehalt von in der Summe höchstens 1 Gew.-% an SrO und/oder CaO.
Bevorzugt ist ein Gehalt von in der Summe wenigstens 0,4 Gew.-% an Na₂O und/oder K₂O, bevorzugt ist ein Gehalt von in der Summe höchstens 1,2 Gew.-% an Na₂O und/oder K₂O.

Vorzugsweise enthält die Glaskeramik TiO₂ mit einem Mindestgehalt von 2,5 Gew.-%. Vorzugsweise enthält die Glaskeramik ZrO₂ mit einem Mindestgehalt von 0,5 Gew.-%. Vorzugsweise enthält die Glaskeramik SnO₂ mit einem Mindestgehalt von 0,05 Gew.-%. Diese drei Komponenten dienen als Keimbildner.
Vorzugsweise enthält die Glaskeramik höchstens 4 Gew.-% TiO₂, da höhere Gehalte die Entglasungsstabilität verschlechtern können.
Vorzugsweise enthält die Glaskeramik höchstens 2 Gew.-% ZrO₂, denn höhere Gehalte können das Einschmelzverhalten des Gemenges bei der Glasherstellung verschlechtern und die Entglasungsstabilität bei der Formgebung durch Bildung ZrO₂-haltiger Kristalle beeinträchtigen.
Vorzugsweise enthält die Glaskeramik weniger als 0,6 Gew.-% SnO₂, da höhere Gehalte die Entglasungsstabilität verschlechtern können.
Bevorzugt ist ein Gehalt von wenigstens 2,8 Gew.-% TiO₂, bevorzugt ist ein Gehalt von höchstens 3,5 Gew.-% TiO₂.

Bevorzugt ist ein Gehalt von wenigstens 1 Gew.-% ZrO₂, bevorzugt ist ein Gehalt von höchstens 1,8 Gew.-% ZrO₂.
Bevorzugt ist ein Gehalt von wenigstens 0,1 Gew.-% SnO₂, bevorzugt ist ein SnO₂-Gehalt von höchstens 0,4 Gew.-% SnO₂., besonders bevorzugt von höchstens 0,3 Gew.-%.
Es ist besonders bevorzugt, dass die Summe aus TiO₂, ZrO₂ und SnO₂ 5,5 Gew.-% nicht überschreitet.

Gemäß einer bevorzugten Ausführungsform enthält die eingefärbte transparente LAS-Glaskeramik als Hauptbestandteile die Komponenten (in Gew.-% auf Oxidbasis):

| | |
|---|---|
| Li₂O | 3,0 - 4,2 |
| Na₂O + K₂O | 0,2 - 1,5 |
| MgO | 0 - 1,5 |
| CaO + SrO | 0 - 4 |
| BaO | 0 - 3 |
| ZnO | 0 - 2,2 |
| Al₂O₃ | 19 - 23 |
| SiO₂ | 60 - 69 |
| TiO₂ | 2,5 - 4 |
| ZrO₂ | 0,5 - 2 |
| SnO₂ | 0,05 - < 0,6 |
| P₂O₅ | 0 - 3 |
| B₂O₃ | 0 - 2 |

sowie die genannten Gehalte von V₂O₅ von 50 ppm bis 250 ppm und Fe₂O₃ von 500 ppm bis 1000 ppm mit einem Verhältnis von Fe₂O₃/ V₂O₅ (beide in Gew.-%) von 3 bis 9 sowie gegebenenfalls Zusätze chemischer Läutermittel wie CeO₂ und von Läuterzusätzen wie Sulfat-, Chlorid-, Fluoridverbindungen in Gesamtgehalten bis zu 2,0 Gew.-%.

Vorzugsweise besteht die Glaskeramik im Wesentlichen aus den genannten Komponenten in den genannten Anteilen. Unter "besteht im Wesentlichen aus ..." wird verstanden, dass diese Komponenten zu mindestens 98 Gew.-% in der Glaskeramik enthalten sind.

Der Wassergehalt der kristallisierbaren Gläser zur Herstellung der Glaskeramiken liegt abhängig von der Wahl der Gemengerohstoffe und den Prozessbedingungen bei der Schmelze vorzugsweise zwischen 0,015 und 0,06 mol/l. Dies entspricht β-OH-Werten von 0,16 bis 0,64 mm⁻¹. Bei der Umwandlung in die Glaskeramik ändert sich die IR-Bande, die zur Bestimmung des Wassergehaltes herangezogen wird. Dadurch erhöht sich messbedingt der β-OH-Wert für die Glaskeramik um einen Faktor von ca. 1,6, ohne dass sich dabei der Wassergehalt ändert. Dies und die Methode zur Bestimmung der β-OH-Werte ist z. B. in der EP 1 074 520 A1 beschrieben.

Gemäß einer weiteren bevorzugten Ausführungsform enthält die eingefärbte transparente LAS-Glaskeramik als Hauptbestandteile die Komponenten (in Gew.-% auf Oxidbasis):

| | |
|---|---|
| Li₂O | 3,2 - 4,0 |
| Na₂O + K₂O | 0,4 - 1,2 |
| MgO | 0,1 - 1,3 |
| CaO + SrO | 0,2 - 1 |
| BaO | 1 - 2,8 |
| ZnO | 1 - 2,2 |
| Al₂O₃ | 20 - 22 |
| SiO₂ | 62 - 67 |
| TiO₂ | 2,8 - 3,5 |
| ZrO₂ | 1 - 1,8 |
| SnO₂ | 0,1 - 0,4 |
| P₂O₅ | 0 - 0,1 |
| B₂O₃ | 0 - 1 |

sowie gegebenenfalls Läuterzusätze wie Sulfat-, Chlorid-, Fluoridverbindungen in Gesamtgehalten bis zu 1,0 Gew.-%.

Vorzugsweise besteht die Glaskeramik im Wesentlichen aus den genannten Komponenten in den genannten Anteilen. Unter "besteht im Wesentlichen aus ..." wird verstanden, dass diese Komponenten zu mindestens 98 Gew.-% in der Glaskeramik enthalten sind.

Die Glaskeramik kann, wenn SnO₂ als Keimbildner vorhanden ist, auch mittels SnO₂ geläutert werden. Es liegt dazu in den oben diskutierten Anteilen vor. Seine Läuterwirkung kann durch die oben genannten Läuterzusätze unterstützt werden.

Um eine sehr gute Läuterwirkung bei den geforderten Blasenqualitäten und Wannendurchsätzen zu erreichen, kann es vorteilhaft sein, eine Hochtemperaturläuterung oberhalb 1700 °C, bevorzugt oberhalb 1750°C durchzuführen. Es wird dabei eine Blasenqualität von weniger als 2 Blasen/kg im Glas bzw. in der Glaskeramik (gemessen ab Blasengrößen größer als 0,1 mm in einer Dimension) erreicht.

Eine Vielzahl von Verbindungen von Elementen wie z.B. den Alkalien Rb, Cs oder Elementen wie Mn, Hf sind bei den großtechnisch verwendeten Gemengerohstoffen übliche Verunreinigungen. Andere Verbindungen wie z.B. solche der Elemente W, Nb, Y, Mo, Bi, der Seltenen Erden können ebenfalls in geringen Anteilen enthalten sein.

Die eingefärbte transparente Lithiumaluminiumsilikat-Glaskeramik enthält üblicherweise Hochquarz-Mischkristalle als Hauptkristallphase. Bevorzugt ist die mittlere Kristallitgröße weniger als 50 nm.

Die erfindungsgemäße LAS-Glaskeramik weist vorzugsweise eine Lichtstreuung angegeben als integraler Haze-Wert für die Normlichtart C bestimmt nach ASTM D1003 - 13 von weniger als 20 %, bevorzugt weniger als 15 % für 3,5 mm auf.

Die thermische Ausdehnung, gemessen zwischen 20 °C und 700 °C, ist bei diesem Typ von LAS-Glaskeramik mit Hochquarz-Mischkristallen vorzugsweise auf Werte von weniger als 1 • 10⁻⁶/K, bevorzugt von (0 ± 0,3) • 10⁻⁶/K eingestellt.

Die Lithiumaluminiumsilikat-Glaskeramik mit Hochquarz-Mischkristallen als Hauptkristallphase kann auf übliche dem Fachmann bekannte Weise in eine Glaskeramik mit Keatit-Mischkristallen als Hauptkristallphase umgewandelt werden. Aufgrund der üblicherweise größeren mittleren Kristallitgröße größer als 120 nm ist diese umgewandelte Glaskeramik transluzent oder opak. Die Glaskeramik mit Hochquarz-Mischkristallen als Hauptkristallphase kann auch derart in eine Glaskeramik mit Keatit-Mischkristallen als Hauptkristallphase umgewandelt werden, dass ihre Kristallite ausreichend klein bleiben, so dass die Glaskeramik transparent ist. Eine solche Glaskeramik mit Keatit-Mischkristallen weist üblicherweise eine thermische Ausdehnung, gemessen zwischen 20 °C und 700 °C von 0,8 • 10⁻⁶/K bis 1,5 • 10⁻⁶/K, vorzugsweise von mehr als 1 • 10⁻⁶/K bis 1,5•10⁻⁶/K, auf.

Die bevorzugte Geometrie für die erfindungsgemäße Glaskeramik bzw. die daraus hergestellten Artikel ist in Form von Platten. Die Platte weist vorzugsweise eine Dicke von 2 mm bis 20 mm auf, weil sich damit wichtige Anwendungen erschließen. Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher in der Regel unter 6 mm gewählt. Bei der Anwendung als Kochfläche werden vorzugsweise Dicken von 2 mm bis 6 mm gewählt. Für die üblichen Standardkochflächen werden üblicherweise Größen bis zu 0,5 m² bevorzugt. Für größere Ausführungen beispielweise mit Farbdisplays oder wenn die Kochfläche gleichzeitig als Arbeitsfläche ausgeführt ist und neben der Kochfunktion weitere Funktionalitäten beinhaltet, die bei der Schilderung der möglichen Kochflächenanwendungen näher ausgeführt sind, werden Formate größer 0,5 m² oder gar größer 0,8 m² bevorzugt.

Geeignete Formgebungsverfahren für die plattenförmige Geometrie sind insbesondere Walzen und Floaten.

Die Glaskeramikplatte und die vorzugsweise daraus hergestellten Artikel können dabei nicht nur eben ausgeformt sein, sondern auch dreidimensional verformt sein. Beispielsweise abgekantete, gewinkelte oder gewölbte Platten können verwendet werden. Die Platten können rechtwinklig oder in anderen Formen vorliegen sowie neben ebenen Bereichen dreidimensional verformte Bereiche wie z.B. Woks oder eingewalzte Stege oder Flächen als Erhebungen bzw. Vertiefungen enthalten. Die geometrischen Verformungen der Platten werden bei der Heißformgebung, z. B. durch strukturierte Formgebungswalzen, oder durch nachgelagerte Heißformgebung an den Ausgangsgläsern, zum Beispiel durch Brenner oder durch Schwerkraftsenken, vorgenommen. Beim Keramisieren wird mit unterstützenden keramischen Formen gearbeitet, um unkontrollierte Änderungen der geometrischen Form zu vermeiden.

Die Glaskeramikplatte und die vorzugsweise daraus hergestellten Artikel können beidseitig glatt oder auf einer Seite genoppt sein.

Durch die mit der niedrigen thermischen Ausdehnung und dem optimierten Transmissionsverlauf verbundenen günstigen optischen und thermischen Eigenschaften sowie den sonstigen, insbesondere mechanischen Eigenschaften werden viele Anwendungen vorteilhaft bedient.
Die erfindungsgemäßen, eingefärbten transparenten Glaskeramikartikel finden Anwendung als Kochfläche, insbesondere als Kochfläche mit Unterseitenbeschichtung, als unterseitig beschichtete Kochfläche mit Aussparungen, sogenannten Spare-outs für Beleuchtung im Kaltbereich, also im Display-/Anzeigenbereich, und/oder im Heißbereich, also im Kochbereich, mit Abdeckmittel, als Kochfläche mit einer sogenannten Diffusor-Schicht, die das von der Unterseite der Kochfläche zum Betrachter hin ausfallende Licht homogen verteilt, als Kochfläche mit einem sogenannten Farbkompensationsfilter, appliziert in geklebter oder gedruckter oder beschichteter Form. Ferner als Kochfläche in einer der oben genannten Ausführungen mit opaken oder transparenten kapazitiven Sensorstrukturen, appliziert in gebondeter, gedruckter oder angedrückter Form zur Regelung und Steuerung des Betriebes. Ferner als Kochfläche in einer der oben genannten Ausführungen mit einer oder mehreren Bohrungen für Bedienknöpfe, Gasbrenner, Abzugsysteme (sogenannte Down-Draft-Systeme) oder sonstige funktionale Module, optional ausgeführt mit einer Flachfacette an einer oder mehreren Kanten.
Ferner als Kochfläche in einer der oben genannten Ausführungen mit lokal im Anzeigen- und/oder Heißbereich erhöhter/modifizierter Transmission, definiert über den Y(D65,2°)-Wert. Die Transmission Y (D65,2°) kann dabei lokal bis zu 50 %, bevorzugt bis zu 30 %, ganz besonders bevorzugt bis zu 25 %, gegenüber der Basistransmission bzw. Nominaltransmission des Substrates erhöht sein.
In einer ganz besonders bevorzugten Ausführungsform ist die Transmission lokal bis zu 5 %, besonders bevorzugt bis zu 2,5 %, gegenüber der Basistransmission erhöht. Auch kann in einer erfindungsgemäßen Ausführungsform die Transmission lokal um 4 %, bevorzugt um 3 %, erniedrigt sein gegenüber der Basistransmission des Substrates.

Die Erniedrigung der Basistransmission kann dabei über eine Beschichtung oder eine Folie oder eine intrinsische lokale Materialmodifikation erfolgen.

In besonderen Ausführungsformen können die Glaskeramiken Anwendung finden für Kochgeräte ausgestattet mit Sensoren zur Messung der Topftemperatur. Derartige Sensoren können dabei beispielsweise direkt im Topf oder über dem Topf angebracht sein oder mittels IR-Sensoren die Topfbodentemperatur erfassen.
Derartige IR-Sensoren arbeiten dabei bevorzugt bei einer Wellenlänge > 1 µm, bevorzugt ≥ 1500 nm. In einer besonderen Ausführungsform arbeiten derartige Sensoren bei einer Wellenlänge von 3 - 5 µm. Die Kochfläche weist deshalb in dem relevanten Wellenlängenbereich eine entsprechende Transmission auf. Dies wird u.a. dadurch gewährleistet, dass entweder das Abdeckmittel lokal ausgespart ist oder in dem relevanten Wellenlängenbereich ausreichend transparent ist.

In weiteren besonderen Ausführungsformen können die Glaskeramiken Anwendung finden für Kochgeräte ausgestattet mit einer kabellosen Datenverbindung. Die Datenverbindung kann dabei zur Vernetzung des Kochgerätes mit einer Abzugshaube, einer zentralen Steuereinheit für Hausgeräte oder auch zur Funktionskontrolle des Gerätes dienen. Datenverbindungen können über IR-Sensoren oder aus Funkverbindungen im GHz Bereich erfolgen, bspw. W-LAN, Bluetooth.

Derartige IR-Sensoren arbeiten dabei bevorzugt bei einer Wellenlänge 0,9 - 1 µm, bevorzugt 930 - 970 nm. Die Kochfläche weist deshalb in dem relevanten Wellenlängenbereich eine entsprechende Transmission auf. Dies wird u.a. dadurch gewährleistet, dass entweder das Abdeckmittel lokal ausgespart ist oder in dem relevanten Wellenlängenbereich ausreichend transparent ist.

In weiteren besonderen Ausführungsformen können die Glaskeramiken Anwendung finden für Kochgeräte ausgestattet mit einer berührungslosen Steuerungstechnologie. Derartige Steuerungen arbeiten bspw. mittels kapazitiver Sensorik, IR-Sensoren oder auch mittels Ultraschallsensoren.

In weiteren besonderen Ausführungsformen können die Glaskeramiken Anwendung finden für Kochgeräte ausgestattet mit LED-basierten bzw. segmentbasierten Anzeigeelementen und oder graphischen Displayelementen. Die graphischen Displayelemente können dabei einfarbig oder mehrfarbig ausgebildet sein. Bevorzugte einfarbige graphische Displays sind weiß. Bevorzugt sind derartige Displayelemente mit einer kapazitiven Touchsensorik ausgebildet.

In weiteren besonderen Ausführungsformen können die Glaskeramiken Anwendung finden für Kochgeräte ausgestattet mit einem Minimum an Oberseitendekor. In einer Ausführungsform befindet sich nur ein oder mehrere Markenlogos und der An/Aus-Schalter auf der Oberseite. Die Dekorfunktion für bspw. Kochzonenmarkierung wird dabei gänzlich über Beleuchtungselemente übernommen.

Ferner werden die Glaskeramiken eingesetzt in Verbindung mit einer funktionalen Oberseitenbeschichtung.
Funktionale Oberseitenbeschichtungen können dabei aufgebracht werden, um die Kratzbeständigkeit zu verbessern, die Reinigungsfähigkeit zu erleichtern, die Sichtbarkeit von Displays zu verbessern, störende Reflektionen zu verhindern, Fingerabdrücke zu minimieren und/oder Topfschiebegeräusche zu minimieren.

In einer besonderen Ausführungsform kann die Oberfläche poliert oder stochastisch strukturiert sein.

Ferner können die erfindungsgemäßen eingefärbten transparenten Glaskeramikartikel Verwendung finden als Kaminsichtscheibe/Kaminofenauskleidung oder -verkleidung, Abdeckung im Beleuchtungssektor und als Sicherheitsglas optional im Laminatverbund, als Trägerplatte oder Ofenauskleidung. In der Keramik-, Solar- oder Pharmaindustrie oder der Medizintechnik eignen sie sich insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung. Weiter finden sie Verwendung als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch- oder Bratfläche, als weiße Ware, als Heizkörperabdeckung, als Wafersubstrat, als Gegenstand mit UV-Schutz, als Fassadenplatte oder als Konstruktionsbestandteil eines elektronischen Gerätes.

Die vorliegende Erfindung wird anhand der folgenden Beispiele weiter verdeutlicht.

Bei den Ausführungsbeispielen A1 bis A6 wurden die Ausgangsgläser aus in der Glasindustrie üblichen Rohstoffen bei Temperaturen von ca. 1620 °C 4 Stunden eingeschmolzen. Nach dem Einschmelzen des Gemenges in Tiegeln aus hoch quarzhaltigem Feuerfestmaterial wurden die Schmelzen in PtRh20-Tiegel mit Innentiegel aus Kieselglas umgegossen und bei Temperaturen von 1600 °C 60 Minuten durch Rühren homogenisiert. Nach dieser Homogenisierung wurden die Gläser für 3 Stunden bei 1640 °C geläutert. Anschließend wurden Stücke von ca. 170 x 120 x 25 mm³ Größe gegossen und in einem Kühlofen, beginnend ab 640 °C, auf Raumtemperatur abgekühlt. Die Gussstücke wurden in die für die Untersuchungen und für die Keramisierung benötigten Größen unterteilt.

Die Ausführungsbeispiele A7 bis A11 wurden großtechnisch mit den für Sn-geläuterte LAS-Glaskeramiken üblichen Parametern geschmolzen.

Die Proben wurden mit dem weiter unten geschilderten Keramisierungsprogamm keramisiert.

Tabelle 1 zeigt für die Beispiele A1 bis A11, die Ausführungsbeispiele darstellen, und V1 bis V8, die Vergleichsbeispiele darstellen, die Zusammensetzungen und Eigenschaften der kristallisierbaren Ausgangsgläser und Eigenschaften der aus den Gläsern hergestellten Glaskeramiken.

Aufgrund von typischen Verunreinigungen in den verwendeten großtechnischen Gemengerohstoffen addieren sich die Zusammensetzungen nicht genau zu 100,0 Gew.-%. Typische Verunreinigungen, auch wenn nicht absichtlich in die Zusammensetzung eingeführt, sind Verbindungen von Mn, Rb, Cs, Hf, oder auch, sofern nicht als Läutermittel eingesetzt, von Cl und F, die üblicherweise nicht mehr als 0,1 Gew.-% betragen. Sie werden oft über die Rohstoffe für die verwandten Komponenten eingeschleppt, so z.B. Rb und Cs über die Na- bzw. K- Rohstoffe oder Hf über den Zr-Rohstoff.

Die Transmissionsmessungen wurden an polierten Platten der Dicke 4 mm mit Normlicht C, 2° durchgeführt. Es sind die Transmissionswerte bei ausgewählten Wellenlängen, nämlich bei 465 nm, bei 470 nm und bei 630 nm, sowie die Lichttransmission angegeben. Die Bezeichnungen Lichttransmission und Helligkeit (brightness) Y entsprechen dergleichen Messgröße, gemessen nach DIN 5033 im CIE Farbsystem als Y (D65, 2°). Außerdem ist die Differenz τᵥᵢₛ - τ₄₆₅, also Y - τ₄₆₅, angegeben.

Das Keramisierungsprogramm sah folgendermaßen aus:
a) Aufheizen von Raumtemperatur auf 600 °C in 5 min,
b) Temperaturerhöhung von 600 °C auf eine Keimbildungstemperatur T_{KB} zwischen 700 °C und 750 °C mit einer Heizrate von 50 K/min, Haltezeit t_{KB} von 5 min.
b1) Temperaturerhöhung auf eine Kristallisationstemperatur T_{Krist} zwischen 780 °C und 820 °C mit einer Heizrate von 12 K/min, Haltezeit t_{Krist} von 8 min bei T_{Krist}.
c) Temperaturerhöhung von T_{Krist} auf eine Maximaltemperatur Tₘₐₓ zwischen 910 °C und 950 °C mit einer Heizrate von 20 K/min, Haltezeit tₘₐₓ von 7 min bei Tₘₐₓ.
d) Abkühlen auf ca. 800 °C mit 10 K/min, dann schnelle Abkühlung auf Raumtemperatur.

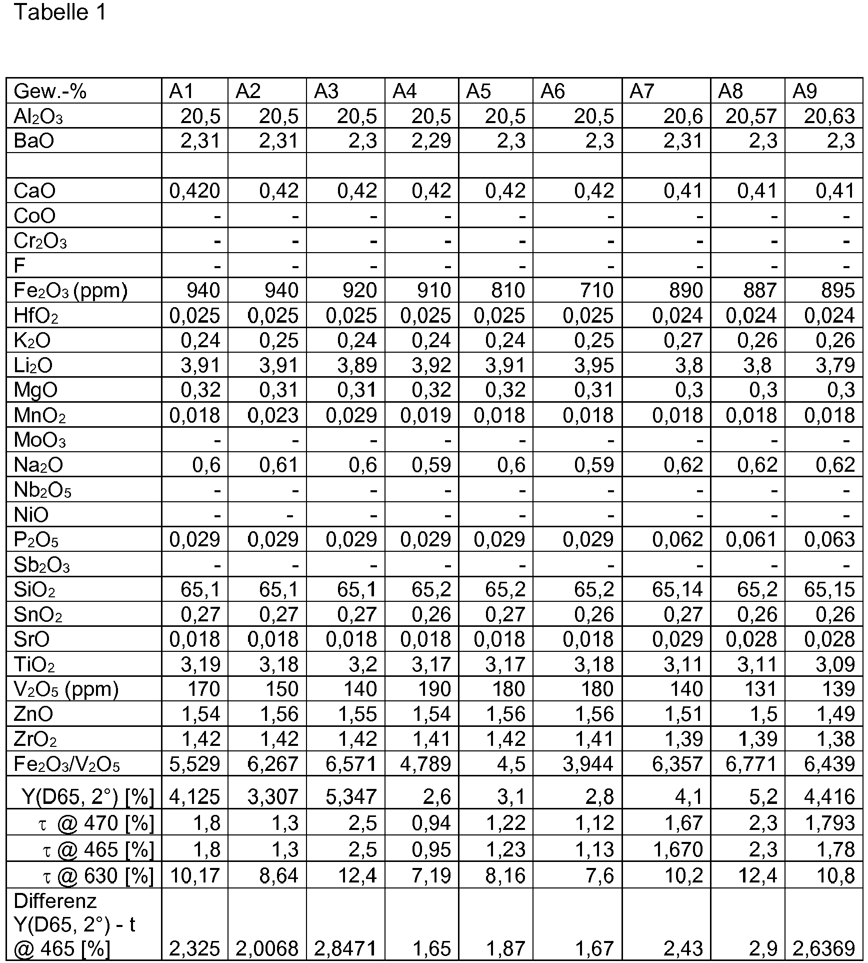

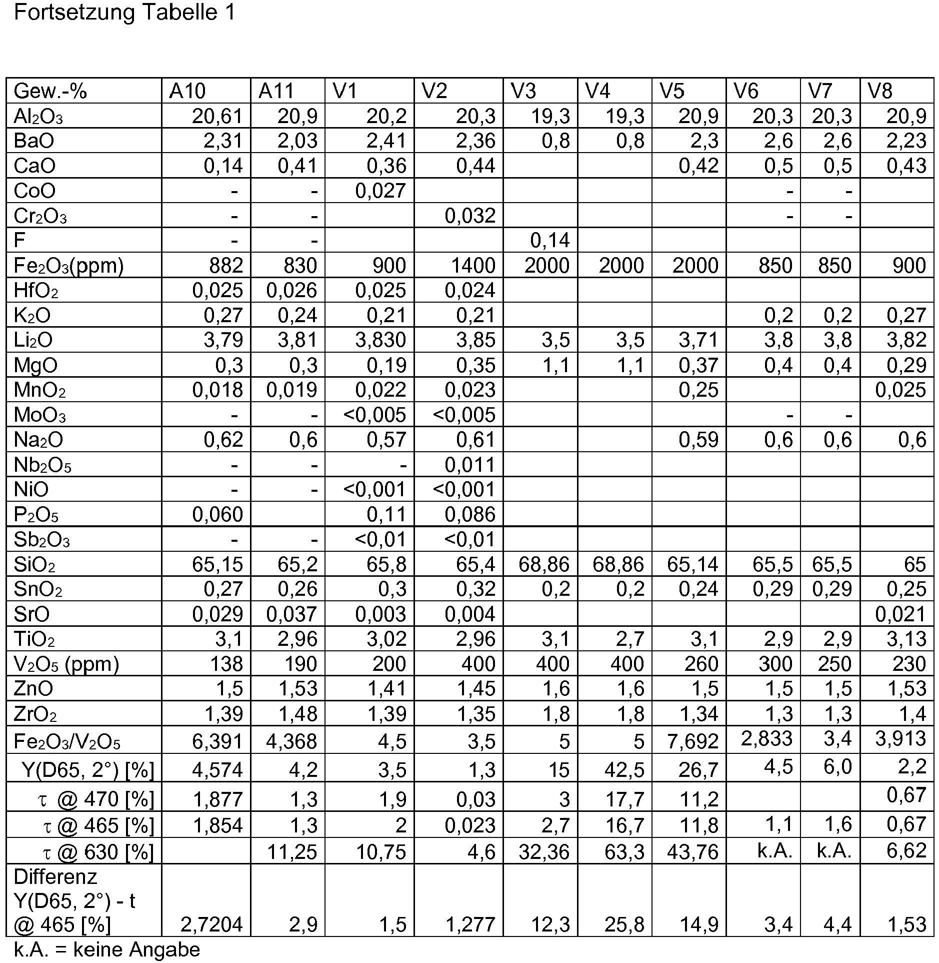

Die Beispiele V1 bis V8 in Tabelle 1 sind Vergleichsglaskeramiken außerhalb der Erfindung.
V1 weist zwar eine Differenz (Y - τ _{(bei 465 nm)}) von ≤ 3 % auf, die Transmissionscharakteristik wird jedoch durch Zusatz von CoO realisiert.
V2 hat ebenfalls eine Differenz (Y - τ _{(bei 465 nm)}) von ≤ 3 %, allerdings sind die Transmissionswerte im Sichtbaren so niedrig, dass bis auf rote Anzeigen keine weiteren Farben sichtbar sind. Dies ist auf den Zusatz von Cr₂O₃ zurückzuführen, das die Transmission im Sichtbaren signifikant reduziert.

Die Beispiele V3 bis V5 weisen allesamt eine Differenz (Y - τ _{(bei 465 nm)}) von > 3 % auf, dies liegt zum Teil an Bereichen mit sehr hohen Transmissionswerten, die auf die sogenannte Eisenüberfärbung zurückzuführen sind.
V6 und V7 weisen zwar eine Lichttransmission Y (D65, 2°) 2,5 - 10 % und eine spektrale Transmission τ _{(bei 465 nm)} > 1,0 % auf. Aber auch ihre Differenz (Y (D65, 2°) - τ _{(bei 465 nm)}) beträgt aber > 3 %.
V8 weist zwar eine Differenz (Y (D65, 2°) - τ _{(bei 465 nm)}) < 3 % auf, dies aber bei geringer Lichttransmission Y (D65, 2°) von 2,2 % und geringer spektraler Transmission τ _{(bei 465 nm)} von 0,67 %.

Die Ausführungsbeispiele A1 bis A11 verdeutlichen, dass die erfindungsgemäßen Glaskeramiken die Transmissionseigenschaften Lichttransmission Y (D65, 2°) 2,5 - 10 %, spektrale Transmission τ _{(bei 465 nm)} > 1,0 % und eine Differenz (Y (D65, 2°) - τ _{(bei 465 nm)}) von ≤ 3 % vereinen und damit sowohl einerseits eine gute Sichtbarkeit der unterseitig montierten Anzeigen bei andererseits reduzierter Einsicht ins Kochfeldinnere als auch eine Farbdurchlässigkeit der Art, dass nicht nur rot, sondern auch Farben wie grün durchgelassen werden und einen sehr neutralen, also unverfälschten Farb- und Helligkeitseindruck, also einen trotz Durchgang durch die Glaskeramikplatte kaum veränderten bis unveränderten Lichteindruck, ermöglichen. Die Ausführungsbeispiele als bevorzugte Ausführungsformen weisen auch eine vorteilhaft hoheTransmission im roten Spektralbereich auf, gezeigt durch eine spektrale Transmission τ bei 630 nm von 10,9 % ± 3,8 %.

Die Ausgangsgläser der erfindungsgemäßen Glaskeramiken besitzen niedrige Schmelz- und Formgebungstemperaturen und sind aus kostengünstigen Gemengerohstoffen herstellbar. Sie zeigen eine hohe Entglasungsfestigkeit.
Sie sind mittels kurzer Keramisierungszeiten in Glaskeramiken umwandelbar.
Die erfindungsgemäßen Glaskeramiken weisen also wirtschaftliche und umweltfreundliche Fertigungseigenschaften auf, letzteres durch den Verzicht auf die umweltschädlichen Rohstoffe Arsenoxid, Antimonoxid, Kobaltoxid und Chromoxid.
Die erfindungsgemäßen Glaskeramiken genügen den Anforderungen der unterschiedlichen Anwendungen. So weisen sie eine gute chemische Beständigkeit, eine hohe mechanische Festigkeit, die gewünschten Transmissionseigenschaften, keine bis geringe Lichtstreuung, eine hohe Temperaturbelastbarkeit und eine hohe Langzeitstabilität hinsichtlich Änderungen ihrer Eigenschaften (wie z.B. thermische Ausdehnung, Transmission, Aufbau von Spannungen) auf.

## Patentansprüche

1. Eingefärbte transparente Lithiumaluminiumsilicat-Glaskeramik,
**gekennzeichnet durch**
einen As₂O₃- und/oder Sb₂O₃-Gehalt von in der Summe 0 - < 1000 ppm,
einen V₂O₅-Gehalt von 55 ppm bis 200 ppm,
einen Fe₂O₃-Gehalt von 450 ppm bis 1000 ppm
mit einem Verhältnis von Fe₂O₃/ V₂O₅ (beide in Gew.-%) von 3 - 9 und bis auf Verunreinigungen Freiheit von CoO, NiO und Cr₂O₃
sowie durch folgende Transmissionseigenschaften:
Y (D65, 2°) 2,5 - 10 %
τ (bei 465 nm) > 1,0 %
mit einer Differenz (Y (D65, 2°) - τ _{(bei 465 nm)}) von ≤ 3 %

2. Lithiumaluminiumsilikat-Glaskeramik nach Anspruch 1,
**gekennzeichnet durch**
Y (D65, 2°) > 2,5 - 10 %
τ (bei 465 nm) > 1,2 %
mit einer Differenz (Y (D65, 2°) - τ _{(bei 465 nm)}) von < 3 %

3. Lithiumaluminiumsilikat-Glaskeramik nach Anspruch 1 oder 2,
**gekennzeichnet durch**
τ _{(630 nm)} von 10,9 % ± 3,8 %, bevorzugt von 10,9 % ± 2,5 %, besonders bevorzugt von 10,9 % ± 2,0 %, ganz besonders bevorzugt 10,9 % ± 1,5 %.

4. Lithiumaluminiumsilikat-Glaskeramik nach einem der vorhergehenden Ansprüche,
**dadurch gekennzeichnet,**
**dass** sie folgende Komponenten in Gew.-% auf Oxidbasis
enthält:
| | |
|---|---|
| Li₂O | 3,0 - 4,2 |
| Na₂O + K₂O | 0,2 - 1,5 |
| MgO | 0 - 1,5 |
| CaO + SrO | 0 - 4 |
| BaO | 0 - 3 |
| ZnO | 0 - 2,2 |
| Al₂O₃ | 19 - 23 |
| SiO₂ | 60 - 69 |
| TiO₂ | 2,5 - 4 |
| ZrO₂ | 0,5 - 2 |
| SnO₂ | 0,05 - < 0,6 |
| P₂O₅ | 0 - 3 |
| B₂O₃ | 0 - 2 |
sowie gegebenenfalls Zusätze chemischer Läutermittel wie CeO₂ und Läuterzusätze wie Sulfat-, Chlorid-, Fluoridverbindungen in einem Gesamtgehalt von bis zu 2,0 Gew.-%.

5. Lithiumaluminiumsilikat-Glaskeramik nach Anspruch 4,
**dadurch gekennzeichnet,**
**dass** sie folgende Komponenten in Gew.-% auf Oxidbasis enthält: ...
| | |
|---|---|
| Li₂O | 3,2 - 4,0 |
| Na₂O + K₂O | 0,4 - 1,2 |
| MgO | 0,1 - 1,3 |
| CaO + SrO | 0,2 - 1 |
| BaO | 1,5 - 2,8 |
| ZnO | 1 - 2,2 |
| Al₂O₃ | 20 - 22 |
| SiO₂ | 62 - 67 |
| TiO₂ | 2,8 - 3,5 |
| ZrO₂ | 1 - 1,8 |
| SnO₂ | 0,1 - 0,4 |
| P₂O₅ | 0 - 0,1 |
| B₂O₃ | 0 - 1 |
sowie gegebenenfalls Läuterzusätze wie Sulfat-, Chlorid-, Fluoridverbindungen in Gesamtgehalten bis zu 1,0 Gew.-%.

6. Lithiumaluminiumsilikat-Glaskeramik nach einem der vorhergehenden Ansprüche,
**dadurch gekennzeichnet,**
**dass** der SnO₂ -Gehalt 0,05 - 0,4 Gew.-%, bevorzugt 0,05 - 0,3 Gew.-%, besonders bevorzugt 0,05 - 0,2 Gew.-%, beträgt.

7. Lithiumaluminiumsilikat-Glaskeramik nach einem der vorhergehenden Ansprüche,
**gekennzeichnet durch**
ein Verhältnis von Fe₂O₃/ V₂O₅ (beide in Gew.-%) von 5 - 7.

8. Lithiumaluminiumsilikat-Glaskeramik nach einem der vorhergehenden Ansprüche,
**gekennzeichnet durch**
einen Fe₂O₃-Gehalt von 700 ppm bis 1000 ppm.

9. Lithiumaluminiumsilikat-Glaskeramik nach einem der vorhergehenden Ansprüche,
**gekennzeichnet durch**
einen V₂O₅-Gehalt von 100 ppm bis 200 ppm.

10. Lithiumaluminiumsilikat-Glaskeramik nach einem der vorhergehenden Ansprüche,
**dadurch gekennzeichnet,**
**dass** sie Hochquarz-Mischkristalle als Hauptkristallphase enthält.

11. Glaskeramikplatte bestehend aus einer Glaskeramik nach mindestens einem der vorhergehenden Ansprüche,
**gekennzeichnet durch**
eine Dicke von 2 mm bis 20 mm.

12. Verwendung eines Gegenstands, der eine Glaskeramik bzw. eine Glaskeramikplatte nach einem der Ansprüche 1 bis 11 umfasst, als Kochfläche, als Kaminsichtscheibe/Kaminofenauskleidung oder -verkleidung, Abdeckung im Beleuchtungssektor und als Sicherheitsglas optional im Laminatverbund, als Trägerplatte oder Ofenauskleidung. In der Keramik-, Solar- oder Pharmaindustrie oder der Medizintechnik eignen sie sich insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung. Weiter finden sie Verwendung als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch- oder Bratfläche, als weiße Ware, als Heizkörperabdeckung, als Wafersubstrat, als Gegenstand mit UV-Schutz, als Fassadenplatte oder als Konstruktionsbestandteil eines elektronischen Gerätes.

13. Verwendung als Kochfläche nach Anspruch 12, wobei die Kochfläche als Kochfläche mit Unterseitenbeschichtung und/oder als unterseitig beschichtete Kochfläche mit Aussparungen, sogenannten Spare-outs für Beleuchtung im Kaltbereich, also im Display-/Anzeigenbereich, und/oder im Heißbereich, also im Kochbereich, mit Abdeckmittel, und/oder als Kochfläche mit einer sogenannten Diffusor-Schicht, die das von der Unterseite der Kochfläche zum Betrachter hin ausfallende Licht homogen verteilt, und/oder als Kochfläche mit einem sogenannten Farbkompensationsfilter, appliziert in geklebter oder gedruckter oder beschichteter Form und/oder als Kochfläche mit opaken oder transparenten kapazitiven Sensorstrukturen, appliziert in gebondeter, gedruckter oder angedrückter Form zur Regelung und Steuerung des Betriebes und/oder als Kochfläche mit einer oder mehreren Bohrungen für Bedienknöpfe, Gasbrenner, Abzugsysteme (sogenannte Down-Draft-Systeme) und/oder sonstige funktionale Module, und/oder mit einer Flachfacette an einer oder mehreren Kanten und/oder als Kochfläche mit lokal im Anzeigen- und/oder Heißbereich erhöhter/modifizierter Transmission, definiert über den Y(D65,2°)-Wert, ausgebildet ist.

## Claims

1. Coloured, transparent, lithium aluminium silicate glass-ceramic,
**characterized by**
an As₂O₃ and/or Sb₂O₃ content of in total 0 - < 1000 ppm,
a V₂O₅ content of 55 ppm to 200 ppm,
an Fe₂O₃ content of 450 ppm to 1000 ppm,
with a ratio of Fe₂O₃/ V₂O₅ (both in wt%) of 3 - 9 and with freedom, barring impurities, from CoO, NiO and Cr₂O₃,
and also by the following transmission qualities:
Y (D65, 2°) 2.5 - 10 %
τ (at 465 nm) > 1.0%
with a difference (Y (D65, 2°) - τ _{(at 465 nm)}) of ≤ 3%.

2. Lithium aluminium silicate glass-ceramic according to Claim 1,
**characterized by**
Y (D65, 2°) > 2.5 - 10%
τ _{(at 465 nm)} > 1.2%
with a difference (Y (D65, 2°) - τ_{(at 465 nm)}) of < 3%.

3. Lithium aluminium silicate glass-ceramic according to Claim 1 or 2,
**characterized by**
τ _{(630 nm)} of 10.9% ± 3.8%, preferably of 10.9% ± 2.5%, more preferably of 10.9% ± 2.0%, very preferably 10.9% ± 1.5%.

4. Lithium aluminium silicate glass-ceramic according to any of the preceding claims,
**characterized in that**
it comprises the following components in wt% on an oxide basis:
| | |
|---|---|
| Li₂O | 3.0 - 4.2 |
| Na₂O + K₂O | 0.2 - 1.5 |
| MgO | 0 - 1.5 |
| CaO + SrO | 0 - 4 |
| BaO | 0 - 3 |
| ZnO | 0 - 2.2 |
| Al₂O₃ | 19 - 23 |
| SiO₂ | 60 - 69 |
| TiO₂ | 2.5 - 4 |
| ZrO₂ | 0.5 - 2 |
| SnO₂ | 0.05 - < 0.6 |
| P₂O₅ | 0 - 3 |
| B₂O₃ | 0 - 2 |
and also, optionally, additions of chemical refining agents such as CeO₂ and refining additives such as sulfate compounds, chloride compounds, fluoride compounds in a total amount of up to 2.0 wt%.

5. Lithium aluminium silicate glass-ceramic according to Claim 4,
**characterized in that**
it comprises the following components in wt% on an oxide basis:
| | |
|---|---|
| Li₂O | 3.2 - 4.0 |
| Na₂O + K₂O | 0.4 - 1.2 |
| MgO | 0.1 - 1.3 |
| CaO + SrO | 0.2 - 1 |
| BaO | 1.5 - 2.8 |
| ZnO | 1 - 2.2 |
| Al₂O₃ | 20 - 22 |
| SiO₂ | 62 - 67 |
| TiO₂ | 2.8 - 3.5 |
| ZrO₂ | 1 - 1.8 |
| SnO₂ | 0.1 - 0.4 |
| P₂O₅ | 0 - 0.1 |
| B₂O₃ | 0 - 1 |
and also, optionally, refining additives such as sulfate, chloride, fluoride compounds in total amounts of up to 1.0 wt%.

6. Lithium aluminium silicate glass-ceramic according to any of the preceding claims,
**characterized**
**in that** the SnO₂ content is 0.05 - 0.4 wt%, preferably 0.05 - 0.3 wt%, more preferably 0.05 - 0.2 wt%.

7. Lithium aluminium silicate glass-ceramic according to any of the preceding claims,
**characterized by**
a ratio of Fe₂O₃/ V₂O₅ (both in wt%) of 5 - 7.

8. Lithium aluminium silicate glass-ceramic according to any of the preceding claims, **characterized by** an Fe₂O₃ content of 700 ppm to 1000 ppm.

9. Lithium aluminium silicate glass-ceramic according to any of the preceding claims,
**characterized by**
a V₂O₅ content of 100 ppm to 200 ppm.

10. Lithium aluminium silicate glass-ceramic according to any of the preceding claims,
**characterized**
**in that** it comprises high-quartz mixed crystals as main crystal phase.

11. Glass-ceramic plate consisting of a glass-ceramic according to at least one of the preceding claims,
**characterized by**
a thickness of 2 mm to 20 mm.

12. Use of an article which comprises a glass-ceramic or a glass-ceramic plate according to any of Claims 1 to 11 as cooking surface, as chimney sight panel/chimney oven lining or facing, covering in the lighting sector and as safety glass optionally in a laminate system, as support plate or oven lining. In the ceramics, solar or pharmaceutical industry or in medical technology, they are suitable for production processes under high-purity conditions, as lining of ovens in which chemical or physical coating procedures are conducted, or as chemically resistant laboratory equipment. They are also used as glass-ceramic article for high-temperature or extreme low-temperature applications, as furnace window for combustion furnaces, as heat shield for shielding hot environments, as covering for reflectors, floodlights, projectors, photocopiers, for applications involving thermomechanical exposure, for example in night vision devices or as covering for heating elements, in particular as cooking or frying surface, as white ware, as heating element covering, as wafer substrate, as article with UV protection, as architectural facing plate or as construction constituent of an electronic appliance.

13. Use as cooking surface according to Claim 12, where the cooking surface takes the form of a cooking surface with underside coating and/or as underside-coated cooking surface with cut-outs, so-called spare-outs for lighting in the cold region, i.e. in the display/indication region, and/or in the hot region, i.e. in the cooking region, with cover means, and/or of a cooking surface having a so-called diffuser layer, which uniformly distributes the light emerging from the underside of the cooking surface towards the viewer, and/or of a cooking surface having a so-called colour compensation filter, applied in adhered or printed or coated form, and/or of a cooking surface with opaque or transparent capacity sensor structures, applied in bonded, printed or pressed-on form for regulating and controlling operation, and/or of a cooking surface having one or more holes for control buttons, gas burners, fume removal systems (so-called down-draft systems) and/or other functional modules, and/or with a flat facet at one or more edges, and/or of a cooking surface having transmission, defined via the Y(D65,2°) value, which is increased/modified locally in the display region and/or hot region.

## Revendications

1. Vitrocéramique d'aluminosilicate de lithium transparente teintée, **caractérisée par**
une teneur en As₂O₃ et/ou Sb₂O₃ de, au total, 0 à < 1 000 ppm,
une teneur en V₂O₅ de 55 ppm à 200 ppm,
une teneur en Fe₂O₃ de 450 ppm à 1000 ppm dotée d'un rapport Fe₂O₃/V₂O₅ (les deux en % en poids) de 3 à 9
et exempte de CoO, NiO et Cr₂O₃ à l'exception des impuretés
ainsi que par les caractéristiques de transmission suivantes :
Y (D65, 2°) 2,5 à 10 %
τ _{(à 465 nm)} > 1,0 %
avec une différence (Y (D65, 2°) - τ _{(à 465 nm)}) ≤ 3 %.

2. Vitrocéramique d'aluminosilicate de lithium selon la revendication 1, **caractérisée par**
Y (D65, 2°) > 2,5 à 10 %
τ _{(à 465 nm)} > 1,2 %
avec une différence (Y (D65, 2°) - τ _{(à 465 nm)}) < 3 %.

3. Vitrocéramique d'aluminosilicate de lithium selon la revendication 1 ou 2, **caractérisée par**
τ_{(630 nm)} de 10,9 % ± 3,8 %, préférablement de 10,9 % ± 2,5 %, particulièrement préférablement 10,9 % ± 2,0 %, tout particulièrement préférablement 10,9 % ± 1,5 %.

4. Vitrocéramique d'aluminosilicate de lithium selon l'une quelconque des revendications précédentes, **caractérisée en ce qu'**elle contient les composants suivants en % en poids sur une base d'oxyde :
| | |
|---|---|
| Li₂O | 3,0 à 4,2 |
| Na₂O + K₂O | 0,2 à 1,5 |
| MgO | 0 à 1,5 |
| CaO + SrO | 0 à 4 |
| BaO | 0 à 3 |
| ZnO | 0 à 2,2 |
| Al₂O₃ | 19 à 23 |
| SiO₂ | 60 à 69 |
| TiO₂ | 2,5 à 4 |
| ZrO₂ | 0,5 à 2 |
| SnO₂ | 0,05 à < 0,6 |
| P₂O₅ | 0 à 3 |
| B₂O₃ | 0 à 2 |
ainsi qu'éventuellement des ajouts d'agents d'affinage chimiques comme CeO₂ et des additifs d'affinage comme des composés de sulfate, de chlorure, de fluorure en une teneur totale allant jusqu'à 2,0 % en poids.

5. Vitrocéramique d'aluminosilicate de lithium selon la revendication 4, **caractérisée en ce qu'**elle contient les composants suivants en % en poids sur une base d'oxyde :
| | |
|---|---|
| Li₂O | 3,2 à 4,0 |
| Na₂O + K₂O | 0,4 à 1,2 |
| MgO | 0,1 à 1,3 |
| CaO + SrO | 0,2 à 1 |
| BaO | 1,5 à 2,8 |
| ZnO | 1 à 2,2 |
| Al₂O₃ | 20 à 22 |
| SiO₂ | 62 à 67 |
| TiO₂ | 2,8 à 3,5 |
| ZrO₂ | 1 à 1,8 |
| SnO₂ | 0,1 à 0,4 |
| P₂O₅ | 0 à 0,1 |
| B₂O₃ | 0 à 1 |
ainsi qu'éventuellement des additifs d'affinage comme des composés de sulfate, de chlorure, de fluorure en des teneurs totales allant jusqu'à 1,0 % en poids.

6. Vitrocéramique d'aluminosilicate de lithium selon l'une quelconque des revendications précédentes, **caractérisée en ce que** la teneur en SnO₂ est de 0,05 à 0,4 % en poids, préférablement de 0,05 à 0,3 % en poids, particulièrement préférablement de 0,05 à 0,2 % en poids.

7. Vitrocéramique d'aluminosilicate de lithium selon l'une quelconque des revendications précédentes, **caractérisée par** un rapport de Fe₂O₃/V₂O₅ (les deux en % en poids) de 5 à 7.

8. Vitrocéramique d'aluminosilicate de lithium selon l'une quelconque des revendications précédentes, **caractérisée par** une teneur en Fe₂O₃ de 700 ppm à 1 000 ppm.

9. Vitrocéramique d'aluminosilicate de lithium selon l'une quelconque des revendications précédentes, **caractérisée par** une teneur en V₂O₅ de 100 ppm à 200 ppm.

10. Vitrocéramique d'aluminosilicate de lithium selon l'une quelconque des revendications précédentes, **caractérisée en ce qu'**elle contient des cristaux mixtes de quartz bêta en tant que phase cristalline principale.

11. Plaque en vitrocéramique constituée d'une vitrocéramique selon au moins l'une des revendications précédentes, **caractérisée par** une épaisseur de 2 mm à 20 mm.

12. Utilisation d'un objet, qui comprend une vitrocéramique ou une plaque en vitrocéramique selon l'une quelconque des revendications 1 à 11, en tant que surface de cuisson, en tant qu'hublot de cheminée/garniture ou habillage de poêle à cheminée, recouvrement dans le secteur de l'éclairage et comme verre de sécurité éventuellement dans un composite feuilleté, comme plaque support ou revêtement de four. Dans l'industrie céramique, solaire ou pharmaceutique ou la technique médicale, ils sont appropriés en particulier pour des procédés de production dans des conditions de haute pureté, comme revêtement de fours dans lesquels des procédés de revêtement chimiques ou physiques sont réalisés, ou comme équipement chimiquement résistant du laboratoire. En outre, ils sont utilisés comme objet vitrocéramique pour des applications à des températures élevées ou extrêmement basses, comme vitre de four pour des fours de combustion, comme écran thermique pour la protection d'environnements chauds, comme recouvrement pour des réflecteurs, des illuminations, des projecteurs, des vidéoprojecteurs, des photocopieuses, pour des utilisations comprenant une sollicitation thermomécanique, par exemple dans des appareils de vision nocturne, ou comme recouvrement pour des éléments chauffants, en particulier comme surface de cuisson ou de rôtissage, comme appareil électroménager, comme recouvrement de corps de chauffe, comme substrat de plaquette, comme objet présentant une protection contre les UV, comme plaque de façade ou comme composant de construction d'un appareil électronique.

13. Utilisation en tant que surface de cuisson selon la revendication 12, la surface de cuisson étant formée en tant que surface de cuisson avec sous-revêtement et/ou en tant que surface de cuisson sous-revêtue avec des évidements, des dénommés économisateurs pour l'éclairage en zone froide, c'est-à-dire dans la zone d'affichage/d'indication, et/ou en zone chaude, c'est-à-dire en zone de cuisson, avec des moyens de recouvrement, et/ou en tant que surface de cuisson dotée d'une dénommée couche de diffuseur, qui répartit de manière homogène la lumière sortant de la face inférieure de la surface de cuisson vers l'observateur, et/ou en tant que surface de cuisson dotée d'un dénommé filtre de compensation de couleur, appliqué sous forme collée ou imprimée ou revêtue et/ou en tant que surface de cuisson dotée de structures de capteurs capacitifs opaques ou transparents, appliquées sous forme liée, imprimée ou pressée pour la régulation et la commande du fonctionnement et/ou en tant que surface de cuisson dotée d'un ou plusieurs trous pour des boutons de commande, des brûleurs à gaz, des systèmes d'aspiration (dénommés systèmes de contre-tirage) et/ou d'autres modules fonctionnels, et/ou dotée d'une facette plane au niveau d'une ou plusieurs arêtes et/ou en tant que surface de cuisson dotée d'une transmission augmentée/modifiée localement dans la zone d'indication et/ou la zone chaude, définie par l'intermédiaire de la valeur Y (D65, 2°).
